# EUROPEAN PATENT SPECIFICATION

(11) **EP 4 440 853 B1**
(45) Date of publication and mention of the grant of the patent: **31.12.2025**
(21) Application number: 22818113.7
(22) Date of filing: 09.11.2022
(51) Int. Cl.: B60C 11/03, B60C 11/13

(54) **A TYRE FOR VEHICLE WHEELS**
LUFTREIFEN FÜR FAHRZEUGRÄDER
PNEU POUR ROUES DE VÉHICULE

(30) Priority: 03.12.2021 IT 202100030701
(43) Date of publication of application: 09.10.2024
(73) Proprietor: Pirelli Tyre S.P.A., 20126 Milan (IT)
(72) Inventor: SPEZIARI, Diego Ettore, 20126 Milano (IT); CASAROTTO, Giovanni, 20126 Milano (IT); MONTESELLO, Stefano, 20126 Milano (IT)
(74) Representative: Susanetto, Carlo
(86) International application number: PCT/IB2022/060788
(87) International publication number: WO 2023/099988

(56) References cited:
- EP-A1- 0 475 929
- DE-A1- 102015 202 746
- JP-A- 2011 162 020
- JP-A- H07 132 709
- JP-A- H09 136 513

## Description

The present invention relates to a tyre for vehicle wheels.

A tyre generally comprises a carcass structure which is shaped toroidally about a rotation axis and which comprises at least one carcass ply which has end edges which are engaged in respective annular anchoring structures, called bead cores.

In a radially external position with respect to the carcass structure, there is provided a belt structure comprising, in the case of car tyres, at least two radially superimposed strips of rubberized fabric which is provided with reinforcement cords, usually made of metal, which are arranged in each strip parallel with each other but in a crosswise manner relative to the cords of the adjacent strip, preferably symmetrically with respect to the equatorial plane of the tyre.

In a radially external position, the belt structure preferably further also comprises at least on the ends of the underlying belt strips, a third layer of textile or metal cords which are arranged circumferentially (a t zero degrees). In tyres of the tubeless type, there is further present a radially inner layer known as a "liner", and which has characteristics of impermeability allowing air to be retained in the tyre itself.

In a radially external position with respect to the belt structure, there is applied a tread band which is made of elastomer material and on which a tread surface for contact with the road surface is defined.

In order also to obtain adequate road grip on a wet road surface, the tyres have a tread band which is provided with grooves with various formations and geometries which delimit portions of the tread band which are intended for contact to the ground, known as blocks.

The main function of the grooves is to allow the evacuate water present between the surface of the tyre and the road surface at the time of mutual contact, preventing the hydrostatic pressure resulting from the impact of the water against the advancing tyre from being able to cause even partial lifting of the tyre from the road surface and the consequent loss of control of the vehicle.

The overall configuration of the tread band defined by the assembly of grooves and blocks constitutes the tread pattern.

The tread pattern may be of the "directional" type, that is to say, configured to be mounted on the vehicle so as to rotate in a preferential travel direction, or "asymmetrical", that is to say, configured to be mounted on the vehicle so as to have at the external side of the vehicle a predetermined flank.

The term "footprint area" is intended the portion of tread band which is instantaneously in contact with the road surface during the rotation of the tyre. Under real conditions, the footprint area is a function of different parameters, including the inflation pressure of the tyre, the load to which it is subjected, the road surface and the driving conditions, for which reference values can, however, be defined.

The term "equatorial plane" of the tyre is intended a plane which is perpendicular to the rotation axis of the tyre and which subdivides the tyre into two substantially identical portions (axial centre plane).

The term "circumferential" direction is intended a direction which is generally directed in the rotation direction of the tyre or, at most, slightly inclined (at most by approximately 5°) with respect to the rotation direction of the tyre.

The term "axial" direction is intended a direction which is substantially parallel to the rotation axis of the tyre or, at most, slightly inclined (at most by approximately 5°) with respect to the rotation axis of the tyre. The axial direction is generally perpendicular to the circumferential direction.

The term "width" with reference to the tread band is intended the width of the radially outermost portion of the tread band (from edge to edge) which is intended for contact with the ground. In other words, the width of the tread band represents the width of the footprint area of the tyre.

The term "central region" of the tread band is intended a tread band portion which extends circumferentially about the equatorial plane of the tyre over a width of at least 30% of the width of the tread band, preferably over a width between 30% and 70% of the width of the tread band.

The central region may or may not extend symmetrically with respect to the equatorial plane.

In particular, when circumferential grooves or virtually circumferential grooves are formed in the tread band, the central region may be delimited at one or both sides by one of the circumferential grooves.

In some embodiments, it may be advantageous to define within the central region an "equatorial region" which extends so as to straddle the equatorial plane and a pair of "intermediate regions" which extend at the axially opposite sides of the equatorial region.

The term "shoulder regions" of the tread band is intended the tread band portions which extend circumferentially at the opposite sides of the central region in an axially external position of the tread band.

Preferably, each shoulder region extends over a width equal to at least 10% of the width of the tread band.

More preferably, each shoulder region extends over a width equal to a fraction between 25% and 30% of the width of the tread band.

When circumferential grooves or virtually circumferential grooves are formed in the tread band, a shoulder region may be delimited at the axially internal side by one of the circumferential grooves.

The term "groove" is intended to be a recess which is formed in a tread band portion and which extends in a main longitudinal direction and which has a width greater than or equal to 1.5 mm.

Preferably, the groove has a depth of at least 3 mm.

The term "sipe" is intended a recess which is formed in a tread band portion and which extends in a main longitudinal direction and which has a width less than 1.5 mm.

A groove or a sipe is referred to as being "circumferential" when it generally extends in a circumferential direction.

A circumferential groove or sipe may be linear or in the form of a broken line, for example, a zigzag line, with successive portions inclined in different manners with respect to the circumferential direction, provided that overall the groove follows a circumferential direction.

A groove or a sipe is referred to as being "transverse" when it extends in a direction which is inclined with respect to the circumferential direction by an acute angle greater than at least 10°.

With reference to the preferential rotation direction of a tyre, when the tread pattern of this tyre is of the directional type, the side wall of a transverse groove or a transverse sipe which is first introduced into a footprint area is referred to as being "frontal".

The width of a groove or a sipe is intended to be measured perpendicularly both to the longitudinal direction of the groove or the sipe and to the radial direction of the tyre, at a depth greater than or equal to 1.5 mm, preferably greater than or equal to 2 mm.

If the width of the groove varies along the longitudinal development thereof, the mean width is considered, and the value thereof is obtained as the mean of the different width values which are suitably weighted as a function of the relative longitudinal extents. For example, if a groove has a width of 5 mm over 80% of the longitudinal extent thereof and a width of 3 mm over the remaining 20%, the mean value of the width to be considered will be equal to 5 x 0.8 + 3 x 0.2 = 4.6 **mm.**

Similarly, if the width of a groove, in particular of a transverse groove, varies along the tread band as a function of the circumferential dimension of the pitch to which it belongs, the mean value is considered.

One end of a groove or a sipe is defined as being "blind" when it does not open into another groove or sipe.

The inclination of a transverse groove or a transverse sipe with respect to a circumferential direction which is identified on the tread band is defined by the acute angle formed by the groove or the sipe with the circumferential direction. As a particular case, a transverse groove or a transverse sipe which extends parallel to the axis of the tyre will have an inclination of 90° with respect to the circumferential direction.

Two (or more) transverse grooves or transverse sipes are inclined "in a concordant manner" when the trend thereof is, for both, increasing or decreasing when they are considered in a Cartesian plane which is positioned on the tread band (tangentially thereto) with the axis of the ordinate parallel to the circumferential direction and the axis of the abscissa parallel to the axis of the tyre.

Consequently, two transverse grooves or transverse sipes are inclined "in a different manner" when the trend thereof is, when considered in this Cartesian plane, increasing for one groove or sipe and decreasing for the other groove or sipe.

Two grooves are "successive" when they are arranged on the tread surface one after the other, considering the rotation of the tyre in any one of the two rotation directions. In particular, two grooves of the same type are successive when other grooves of this type are not provided between them.

Two grooves are "substantially aligned" when, at least in the region of the respective ends thereof facing each other, the longitudinal axes thereof are:
- aligned; or
- offset by a value less than the width of the grooves (in the case of grooves with a different width, the groove with the greatest width will be considered); or
- offset by a value less than 5 **mm.**

A first transverse groove or a first plurality of transverse grooves is/are "axially corresponding" to a second transverse groove or a second plurality of transverse grooves when the geometric projection onto the equatorial plane of the first transverse groove or the first plurality of transverse grooves is overlapped over at least 80% the geometric projection onto the equatorial plane of the second transverse groove or the second plurality of transverse grooves.

The term "block" is intended a tread band portion which is intended for contact with the road surface and which is delimited over the entire periphery thereof by one or more grooves and where applicable by an axial end of the tread band.

A tread band portion is said to be "solid" when it does not have any grooves or sipes or when the grooves or sipes which may be formed in the tread band portion each have a length less than 20% of the corresponding dimension of the tread band portion, wherein the term "corresponding dimension" means the dimension of the tread band portion in the direction which is defined by the longitudinal direction of the groove or the sipe which may be formed in the tread band portion.

For example, if a groove or a sipe which is formed in a tread band portion extends in the axial direction of the tread band, the corresponding dimension to be considered will be the axial dimension of the tread band portion.

Preferably, this tread band portion is a block which is formed on the tread band.

The term "tread pattern" is intended the overall configuration of the tread band as defined by the set of grooves and blocks which are delimited thereby.

A "pitch" of the tread pattern is defined by the minimum tread band portion which is delimited circumferentially, at least partially, by transverse grooves, the configuration of the minimum tread band portion being repeated over the circumferential development of the tread band in order to form said tread pattern.

Furthermore, while maintaining an identical basic configuration, the pitches may have a circumferential dimension (said "pitch length") which is slightly different from each other, for example, on a tread band there may be used the same pitch having two, three or four mutually different circumferential dimensions which are arranged on the tread band in variously combined manners.

It may be noted that, in the tread pattern, there can also be defined two or more mutually different pitches. In this case, the total number of pitches formed on the tread band is given by the total of all the pitches, even if different from each other.

According to a preferred embodiment, the tread band is axially affected by a single pitch which extends over all the regions of the tread band. Preferably, this pitch extends between the opposite axial ends of the tread band.

In other cases, however, there may be provided different pitches in the different tread band regions, for example, a first pitch in the shoulder regions and a second pitch, where applicable different from the first pitch, in the central region. In this case, the total number of pitches which are formed on the tread band is considered to be given by the highest number of pitches which can be detected in the different tread band regions. For example, if, in the shoulder region there are present 96 pitches and in the central region there are present 72 pitches, then the total number of pitches formed on the tread band is 96.

The term "mean pitch length" is intended the ratio between the measurement of the external circumference of the tread band and the total number of pitches formed on the tread band.

A number of examples of tyres which are specifically constructed to have good traction characteristics both on a dry surface and on a snowy surface are described in EP 2748018. To this end, EP 2748018 indicates a number of parameters of the tyre which can be optimized, including the density of sipes and lateral grooves in the footprint area, the length and the number of pitches.

DE 102015202746, JP 2011162020, JP H07132709, JP H09136513 and EP 475929 disclose further exemplary embodiments of tyres according to the prior art.

The Applicant has previously observed that, in order to improve the characteristics of grip of a tyre on a snowy surface, it is very important for the tyre to be provided with a tread pattern which is capable of providing many gripping edges and, in the case of travel on a snowy surface, of retaining during the rolling movement thereof a specific quantity of snow, given that the friction between snow and snow is generally greater than the friction between snow and rubber.

In particular, the Applicant has established how this objective is generally achieved by forming sipes on the blocks of the tread band.

The provision of sipes is generally used in winter tyres and has been set out in many embodiments, with sipes with a rectilinear trend, or with a broken line (in zigzag form) which extend in an axial direction or which is differently inclined with respect to the equatorial plane or develops in the longitudinal direction of the single blocks.

However, the Applicant has observed how the provision of sipes on the blocks, although on the one hand it substantially improves the performance levels on snowy surfaces, on the other hand can influence in a significantly negative manner the performance levels of the tyre on a dry or wet road surface.

In fact, the sipes bring about an inevitable weakening of the blocks on which they are formed, with this involving a reduced resistance to the tangential stresses to which the tyre is subjected during the operations of acceleration, braking or driving bends. As a result, during the driving operations set out above, the blocks tend to deform, reducing the road surface grip of the tyre.

The Applicant has further detected that there have been developed and proposed many solutions which tend to improve the resistance to tangential stresses of the blocks which are provided with sipes, based, for example, on the development of the sipes (such as the sipes which are developed along a broken line, in zigzag form) or based on particular profiles with interlocking of the sipes which, to some degree, secure to each other the block portions which are separated by the sipes themselves (so-called "three-dimensional sipes").

However, the Applicant has verified that using similar solutions, while generally improving the behaviour of the tyre on dry surfaces, also does not lead to completely satisfactory results. Furthermore, the Applicant has observed that the dual effect of the sipes on the behaviour of the tyre (positive on snowy surfaces and negative on dry or wet surfaces) becomes even more evident in tyres which are configured to obtain good performance levels on any road surface (so-called "all season" tyres), wherein, in attempting to find an optimum compromise between the opposing requirements set out above, the blocks are often provided with a limited number of sipes.

Therefore, the Applicant has perceived a requirement to provide a tyre, the tread pattern of which is suitable to the greatest possible extent for being efficiently used under travel conditions on road surfaces which are very different from each other, in particular on dry, wet, snowy or mixed water/snow surfaces (slush).

In attempting to comply with this requirement, the Applicant has therefore perceived that a tread band having a high number of pitches also involves, for the same diameter and tread pattern, a high number of transverse grooves with a reduced width which can be suitably used to provide the high number of gripping edges and the effect of retaining snow required for effective behaviour on snowy surfaces without any need for forming sipes in the blocks, thereby preserving the resistance thereof to the tangential stresses which is advantageous for similarly effective behaviour on dry surfaces.

Finally, the Applicant has found that, by configuring the tread band with a high number of pitches, a tread pattern which is highly balanced is obtained and is able to provide surprising performance levels both on snowy road surfaces and on dry road surfaces.

Therefore, in a first aspect thereof, the invention relates to a tyre for vehicle wheels according to claim 1.

As a result of these features, the Applicant has verified that the tyre according to the invention has optimum performance levels on road surfaces which are very different from each other, such as, for example, a snowy surface and a dry surface.

In fact, the provision of such a high number of pitches allows and to some degree leads the definition of a high number of grooves and blocks having a relatively low size in the circumferential direction.

Advantageously, this leads to a tread pattern which is provided with many gripping edges and a good retention capacity for snow so as to overcome the need for forming sipes on the blocks.

These features advantageously allow the use of a tread pattern as the basis for constructing different types of tyres, and particularly tyres of the "all season" type.

The present invention, in the above-mentioned aspect, may have at least one of the additional preferred features indicated below.

In some embodiments, said total number of pitches is less than 250, more preferably less than 200.

In this manner, the dimensions in the circumferential direction of grooves and blocks are not too small even in tyres with diameters of the tread band which are relatively small.

Preferably, said total number of pitches is between 120 and 180 and in an even more preferable manner between 130 and 160.

In this manner, the number of pitches leads to circumferential dimensions for grooves and blocks which are particularly optimized in order to provide optimum behaviour performance levels both on snowy surfaces and on dry surfaces.

In some embodiments, there is defined on said tread pattern a single pitch which is successively repeated continuously over the entire circumferential development of said tread band.

In some embodiments, said tread pattern has a mean pitch length between 10 mm and 18 mm. Preferably, said mean pitch length is between 10 mm and 14 mm.

In some embodiments, said tread band has an external circumference less than 2600 **mm.**

Preferably, said external circumference is less than 2400 mm and, even more preferably, said external circumference is between 1650 mm and 2200 mm.

Preferably, the blocks of said plurality are, at least in said central region, solid blocks.

As a result of this feature, the blocks of the central region of the tread band are capable of withstanding more effectively the tangential forces. In this manner, there is produced a better grip of the tyre on dry or wet road surfaces, particularly in the case of acceleration or braking.

In some embodiments, said blocks, at least in one of said shoulder regions and more preferably in both shoulder regions, are solid blocks.

In this manner, the blocks of one or both shoulder regions of the tread band are capable of withstanding more effectively the tangential forces. In this manner, there is produced a better grip of the tyre on dry or wet road surfaces, particularly when driving bends.

In some embodiments, at least 60% and preferably at least 90% of the blocks which are formed on said tread band are solid blocks.

More preferably, all the blocks which are formed on said tread band are solid blocks.

Preferably, said central region has an axial dimension which extends over a fraction between 40% and 60%, more preferably between 40% and 50%, of the width of said tread band.

Preferably, each shoulder region has an axial dimension which extends over a fraction between 20% and 40%, more preferably between 25% and 35%, of the width of said tread band.

Preferably, said first circumferential groove has a width between 3 mm and 10 mm.

Preferably, said equatorial region has an axial dimension which extends over a fraction between 10% and 30%, more preferably between 15% and 20%, of the width of said tread band.

Furthermore, said equatorial region preferably has an axial dimension which extends over a fraction between 20% and 60%, more preferably between 35% and 45%, of the width of said central region.

Preferably, each intermediate region has an axial dimension which extends over a fraction between 5% and 20%, more preferably between 10% and 15%, of the width of said tread band.

Furthermore, preferably, each intermediate region has an axial dimension which extends over a fraction between 20% and 40%, more preferably between 25% and 35%, of the width of said central region.

Preferably, each second circumferential groove has a width between 3 mm and 10 mm.

Preferably, said first plurality of transverse grooves defines a path which extends transversely from said first axial end towards said equatorial plane.

Preferably, said second plurality of transverse grooves defines a path which extends transversely from said second axial end towards said equatorial plane.

Preferably, said second plurality of transverse grooves is axially correspondent to said first plurality of transverse grooves.

The transverse grooves of the first plurality as well as the transverse grooves of the second plurality can be substantially aligned with each other or, conversely, can be misaligned.

In some embodiments, two (or more) transverse grooves of the first plurality and/or the second plurality can extend in continuation of each other so as to form a continuous transverse groove.

If all the transverse grooves of the first plurality extend in continuation of each other, the first plurality of transverse grooves become in fact a single first transverse groove.

Similarly, if all the transverse grooves of the second plurality extend in continuation of each other, the second plurality of transverse grooves becomes in fact a single second transverse groove.

In some embodiments, each first plurality of transverse grooves comprises a first transverse shoulder groove which extends from said first axial end of said tread band through said first shoulder region.

In some embodiments, each first plurality of transverse grooves comprises a first intermediate transverse groove which extends through a first intermediate region of said central region.

In some embodiments, each first plurality of transverse grooves comprises a first equatorial transverse groove which extends through an equatorial region of said central region.

In some embodiments, said first intermediate transverse groove is substantially aligned with said first equatorial transverse groove.

In some embodiments, said first intermediate transverse groove extends in continuation of said first equatorial transverse groove, forming a first central transverse groove which extends in said central region.

In some embodiments, each second plurality of transverse grooves comprises a second transverse shoulder groove which extends from said second axial end of said tread band through said second shoulder region.

In some embodiments, each second plurality of transverse grooves comprises a second intermediate transverse groove which extends through a second intermediate region of said central region.

In some embodiments, each second plurality of transverse grooves comprises a second equatorial transverse groove which extends through an equatorial region of said central region.

In some embodiments, said second intermediate transverse groove is substantially aligned with said second equatorial transverse groove.

In some embodiments, said second intermediate transverse groove extends in continuation of said second equatorial transverse groove, forming a second central transverse groove which extends in said central region.

Preferably, said first equatorial transverse groove is connected to said second equatorial transverse groove at said equatorial region.

Preferably, said first central transverse groove is connected to said second central transverse groove at said central region.

This feature can be carried out when equatorial transverse grooves are not defined on the tread band, but instead central transverse grooves.

Preferably, said first transverse shoulder groove has an angle of inclination which is greater than the angle of inclination of said first intermediate transverse groove and said first equatorial transverse groove.

Alternatively, said first transverse shoulder groove preferably has an angle of inclination which is greater than the angle of inclination of said first central transverse groove.

Preferably, said second transverse shoulder groove has an angle of inclination which is greater than the angle of inclination of said second intermediate transverse groove and said second equatorial transverse groove.

Alternatively, said second transverse shoulder groove preferably has an angle of inclination which is greater than the angle of inclination of said second central transverse groove.

In this manner, the blocks which are delimited by the first and/or second intermediate transverse grooves and/or the first and/or second equatorial transverse grooves (or central grooves, when provided) provide a greater resistance to the tangential stresses which have a main circumferential direction, which advantageously involves better behaviour of the central region of the tread band during braking and acceleration.

Furthermore, this formation facilitates the rapid discharge of the water from the central region of the tread band in the case of the road surface being wet.

Preferably, said first transverse shoulder groove and/or said second transverse shoulder groove is/are substantially rectilinear.

Preferably, said first intermediate transverse groove and/or said second intermediate transverse groove is/are substantially rectilinear.

Preferably, said first equatorial transverse groove and/or said second equatorial transverse groove is/are substantially rectilinear.

Preferably, said first transverse shoulder groove and/or said second transverse shoulder groove is/are inclined with respect to the circumferential direction at an angle between 80° and 85°, more preferably of approximately 82°.

Preferably, said first intermediate transverse groove and/or said second intermediate transverse groove is/are inclined with respect to the circumferential direction at an angle between 30° and 70°, more preferably between 40° and 60°.

Preferably, said first equatorial transverse groove and/or said second equatorial transverse groove is/are inclined with respect to the circumferential direction at an angle between 30° and 70°, more preferably between 40° and 60°.

In some embodiments, said first plurality of transverse grooves and said second plurality of transverse grooves are inclined in a mutually different manner.

In some embodiments, said first plurality of transverse grooves and said second plurality of transverse grooves are inclined in a substantially symmetrical manner with respect to said equatorial plane of said tyre.

Preferably, a transverse groove has a width between 1.5 mm and 6 mm.

Preferably, a transverse groove has a width between 2 mm and 6 mm.

Preferably, a transverse groove has a width between 2 mm and 4 mm.

Preferably, a transverse groove has a width between 1.5 mm and 4 mm.

Preferably, a transverse groove has a width between 1.6 mm and 3 mm.

Preferably, said first transverse shoulder groove and/or said second transverse shoulder groove has/have a width between 2 mm and 6 mm, more preferably between 2 mm and 4 mm.

Preferably, said first intermediate transverse groove and/or said second intermediate transverse groove has/have a width between 1.5 mm and 4 mm, more preferably between 1.6 mm and 3 mm. Preferably, said first equatorial transverse groove and/or said second equatorial transverse groove has/have a width between 1.5 mm and 4 mm, more preferably between 1.6 mm and 3 mm.

In some embodiments, said first intermediate transverse groove and/or said second intermediate transverse groove has/have a width less than said first transverse shoulder groove and/or said second transverse shoulder groove.

In some embodiments, said first equatorial transverse groove and/or said second equatorial transverse groove has/have a width less than said first transverse shoulder groove and/or said second transverse shoulder groove.

Preferably, said first intermediate transverse groove and/or said second intermediate transverse groove has/have a width equal to said first equatorial transverse groove and/or said second equatorial transverse groove.

In some embodiments, at least one block which is delimited by a transverse groove of said first plurality and/or said second plurality has a chamfered edge at a lateral wall of said transverse groove.

In some embodiments, said at least one block has a chamfered edge at a lateral wall of a first transverse shoulder groove and/or a second transverse shoulder groove.

In some embodiments, said at least one block has a chamfered edge at a lateral wall of a first intermediate transverse groove and/or a second intermediate transverse groove.

In some embodiments, said at least one block has a chamfered edge at a lateral wall of a first equatorial transverse groove and/or a second equatorial transverse groove.

In some embodiments, said at least one block has a chamfered edge at a lateral wall of a first central transverse groove and/or a second central transverse groove.

In this manner, the capacity for retaining snow is increased in the region of one or more transverse grooves of the first plurality and/or the second plurality of transverse grooves which are affected by the chamfered edges of the blocks.

In particular, the Applicant has found that this feature involves a significant and surprising increase in the overall performance levels of the tyre on snowy surfaces. Furthermore, in the event of travel on dry surfaces, a better behaviour is found in the case of braking and a reduction of the noise emissions.

In some embodiments, said tread pattern is of the directional type.

In some embodiments, with respect to a preferential rolling direction of said tyre, said chamfered edge is formed at a lateral front wall of said transverse groove.

Preferably, all the blocks which are delimited by a transverse groove of said first plurality and/or said second plurality have a chamfered edge in the region of a lateral front wall of said transverse groove.

In additional embodiments, at least two blocks which are separated by a groove of said plurality of first transverse grooves and/or said plurality of second transverse grooves have chamfered edges in the region of opposite side walls of said groove.

The features and advantages of the invention will be better understood from the detailed description of a number of preferred embodiments thereof which are illustrated by way of non-limiting example with reference to the appended drawings, in which:
- Figure 1 is a perspective front view of a first embodiment of a tyre for vehicles wheels which is formed according to the present invention;
- Figure 2 is a perspective view drawn to an enlarged scale of a portion of the tyre of Figure 1,
- Figure 3 is a schematic view of a significant portion of the tread pattern of the tyre of Figure 1,
- Figure 4 is a perspective view drawn to an enlarged scale of a portion of a construction variant of the tyre of Figure 1.

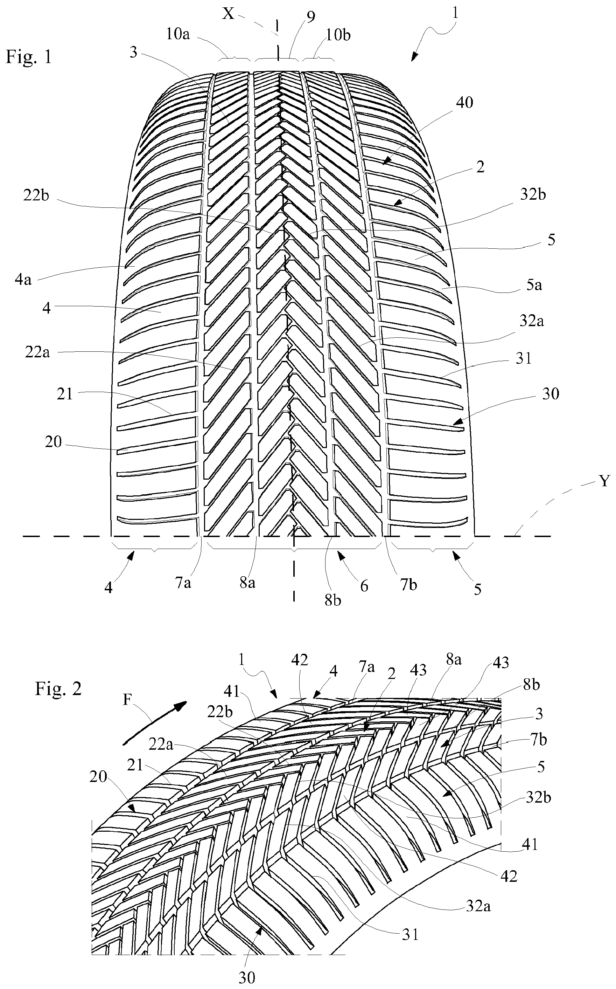

Initially with reference to Figures 1 to 3, there is generally designated 1 a tyre for vehicles wheels which is constructed according to the present invention.

The tyre 1 comprises a tyre structure which is conventional per se and which is not illustrated in the appended Figures and a tread band 2 on which there is defined a tread surface 3 which is arranged in a radially external position on the tread band 2 and which is intended for contact with the road surface.

The tyre 1 has a conventional, generally toroidal shape which develops about a rotation axis, defining on the tread surface 3 an axial direction Y which is parallel therewith and through which an equatorial plane X which is perpendicular to the rotation axis, and which defines on the tread surface 3 a circumferential direction parallel therewith extends.

There is identified on the tread band 2 a width L which is defined as the maximum width of the tread band which is intended for contact with the ground under standard conditions of use.

The tyre 1 is a tyre of the directional type, wherein there is defined a preferential rolling direction of the tyre which is denoted in the Figures with the arrow F.

The tyre 1 described herein in detail is a car tyre with the measurement 225/50 R17 and therefore has an external circumference of the tread band of approximately 2060 mm, but the inventive concept forming the basis of the present invention is also similarly applicable to tyres of different dimensions.

There is further defined on the tread band 2 a first shoulder region 4 which is delimited at the axially external side by a first axial end 4a of the tread band 2, a second shoulder region 5, which is axially opposite the first shoulder region 4 and which is delimited at the axially external side by a second axial end 5a of the tread band 2.

A central region 6, which extends so as to straddle the equatorial plane X, is further defined between the first shoulder region 4 and the second shoulder region 5.

The central region 6 extends symmetrically with respect to the equatorial plane X over approximately 45% of the width L of the tread band 2 and is separated from the first shoulder region 4 and from the second shoulder region 5 by first circumferential grooves 7a, 7b which have a width of approximately 5 mm.

As a result, the first shoulder region and the second shoulder region each constitute approximately from 27% to 28% of the width L of the tread band 2.

The central region 6 is in turn passed through by a pair of second circumferential grooves 8a, 8b which also have a width of approximately 5 mm so as to define therein an equatorial zone 9 which extends symmetrically so as to straddle the equatorial plane X and a first and a second intermediate region 10a, 10b which extend between the equatorial region 9 and the first shoulder region 4 and the second shoulder region 5, respectively.

The equatorial region 9 has an axial dimension which constitutes approximately from 18% to 19% of the width L of the tread band 2 while each intermediate region 10a, 10b constitutes approximately from 13% to 14% of the width L of the tread band 2.

A succession of first pluralities of transverse grooves 20 and a corresponding succession of second pluralities of transverse grooves 30 are further formed over the circumferential development of the tread band 2.

Each first plurality of transverse grooves 20 extends from the first axial end 4a as far as the equatorial region 9 while each second plurality of transverse grooves 30 extends from the second axial end 5a as far as the equatorial region 9.

Each first plurality of transverse grooves 20 defines a path which extends transversely from the first axial end 4a towards the equatorial plane X and, in a generally similar manner, each second plurality of transverse grooves 30 defines an additional path which extends transversely from the second axial end 5a towards the equatorial plane X.

Each first plurality of transverse grooves 20 further axially corresponds to a corresponding second plurality of transverse grooves 30 and in particular the two pluralities of transverse grooves 20 and 30 are substantially aligned with each other in the axial direction apart from a slight offset, in the order of a few millimetres, which is suitably introduced in order to optimize the performance levels of the tyre in terms of noise.

The first plurality of transverse grooves 20 is inclined in a different manner from the second plurality of transverse grooves 30 and in particular the first plurality of transverse grooves 20 has an increasing trend from the first axial end 4a towards the equatorial plane X while the second plurality of transverse grooves 30 has a decreasing trend from the equatorial plane X as far as the second axial end 5a.

Preferably, except for the above-mentioned offset, the first plurality of transverse grooves 20 and the second plurality of transverse grooves 30 are substantially symmetrical to each other with respect to the equatorial plane X.

Each first plurality of transverse grooves 20 comprises:
- a first transverse groove 21 which is substantially rectilinear, and which extends from the first axial end 4a as far as the first circumferential groove 7a passing through the first shoulder region 4,
- a first intermediate transverse groove 22a which is also substantially rectilinear, and which extends from the first circumferential groove 7a to the second circumferential groove 8a through the first intermediate region 10a and
- a first equatorial transverse groove 22b which is also substantially rectilinear, and which extends through the equatorial region 9 from the second circumferential groove 8a.

Similarly, each second plurality of transverse grooves 30 comprises:
- a second transverse groove 31 which is substantially rectilinear, and which extends from the second axial end 5a as far as the first circumferential groove 7b passing through the second shoulder region 5,
- a second intermediate transverse groove 32a which is also substantially rectilinear, and which extends from the first circumferential groove 7b to the second circumferential groove 8b through the second intermediate region 10b and
- a second equatorial transverse groove 32b which is also substantially rectilinear, and which extends through the equatorial region 9 from the second circumferential groove 8b.

Each first equatorial transverse groove 22b extends until being connected to a second equatorial transverse groove 32b in a region near the axially internal end of the second equatorial transverse groove 32b. In the same manner, each second equatorial transverse groove 32b extends until being connected to a first equatorial transverse groove 22b in a region near the axially internal end of the first equatorial transverse groove 22b.

This configuration of the axially internal end regions of the first equatorial transverse grooves 22b and the second equatorial transverse grooves 32b defines a broken line, in zigzag form, which develops continuously over the entire circumferential extent of the equatorial plane X and preferably extends beyond it in each successive portion thereof.

Each first transverse shoulder groove 21 and each second transverse shoulder groove 31 are inclined with respect to the circumferential direction by approximately 82°, respectively, while each first intermediate transverse groove 22a, each first equatorial transverse groove 22b, each second intermediate transverse groove 32a and each second equatorial transverse groove 32b are inclined with respect to the circumferential direction by approximately 50°.

In each first plurality of transverse grooves 20, the first intermediate transverse groove 22a and the first equatorial transverse groove 22b are aligned with each other. Similarly, in each second plurality of transverse grooves 30, the second intermediate transverse groove 32a and the second equatorial transverse groove 32b are aligned with each other.

The first circumferential grooves 7a, 7b and the second circumferential grooves 8a, 8b together with the first plurality of transverse grooves 20 and the second plurality of transverse grooves 30 delimit a plurality of blocks which are jointly designated 40 and which are arranged in the shoulder regions 4**,** 5, in the intermediate regions 10a, 10b and in the equatorial region 9.

In particular, shoulder blocks 41, intermediate blocks 42 and equatorial blocks 43 remain identified on the tread band 2**.**

All the blocks 40 have a substantially rectangular formation and are solid blocks, not being affected by grooves or other types of recesses.

The blocks and grooves identified above generally define the tread pattern of the tyre 1.

In particular, a pitch M which extends through the tread band 2 between the two axial ends 4a, 5a remains defined between two successive pairs of first pluralities of transverse grooves 20 and second pluralities of transverse grooves 30.

Each pitch M is formed by a single row of blocks 40.

The configuration of the pitch M is repeated in a manner identical to itself over the entire circumferential development of the tread band while the circumferential dimension of adjacent pitches (pitch length) may be different.

For example, in the embodiment described herein in detail, there is provision for the pitch M to be able to have one of three different pitch length values so that, consequently, the circumferential dimensions of the blocks and of the grooves which delimit each pitch are also slightly variable.

In particular, the first transverse shoulder grooves 21 and the second transverse shoulder grooves 31 have a width between 2 mm and 4 mm, respectively, while the first intermediate transverse grooves and equatorial transverse grooves 22a, 22b and the second intermediate transverse grooves and equatorial transverse grooves 32a, 32b have a width between 1.6 mm and 3 mm, respectively.

There are defined in the tread band 2 of the tyre 1 a total number of pitches of 144 with a mean pitch length of approximately 14 mm.

In other embodiments of the tyre not illustrated here, the same overall configuration of the tread pattern is maintained and in particular the form of the pitch M, but the total number of pitches formed on the tread band 2 is different, being, for example, 124, 134, 154 or 164 pitches, with resultant variations of the mean pitch length.

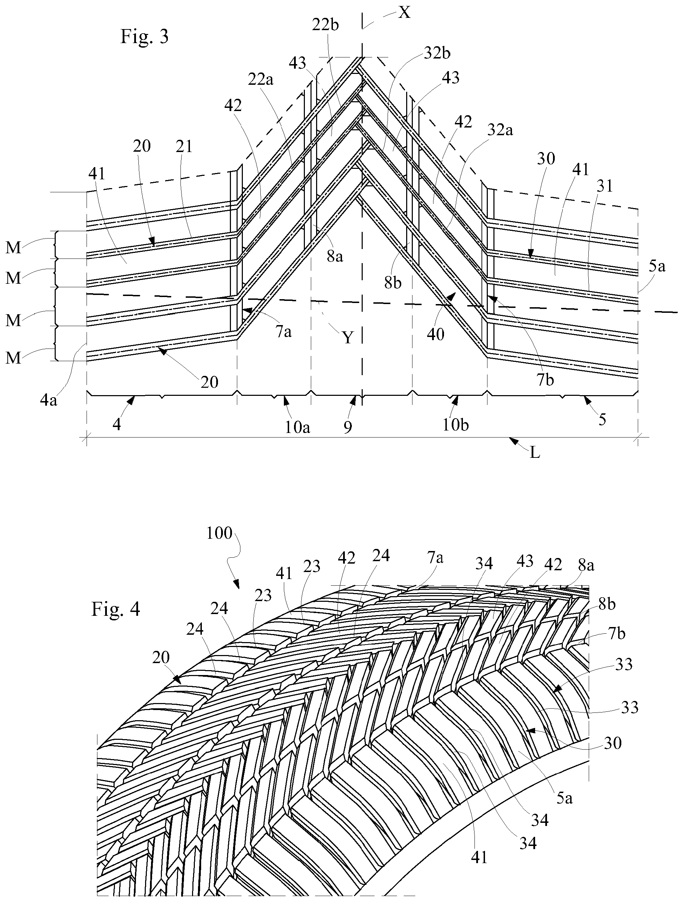

One alternative embodiment of the tyre 1 which is generally designated 100 is illustrated in Figure 4.

Details of the tyre 100 which are similar to the tyre 1 are indicated in Figure 4 with the same reference numerals as the preceding embodiment.

The tyre 100 differs from the tyre 1 as a result of the fact that the blocks 40 have a chamfered edge which is designated 24 or 34 in Figure 4, in the region of a lateral front wall 23 or 33 of a transverse groove of the first plurality of transverse grooves 20 or the second plurality of transverse grooves 30, respectively.

The chamfered edges 24 and 34 are formed on the entire longitudinal development of the edges of the blocks 40 which are delimited by the first plurality of transverse grooves 20 and the second plurality of transverse grooves 30, therefore including both the first transverse shoulder, intermediate and equatorial grooves 21, 22a and 22b and the second transverse shoulder, intermediate and equatorial grooves 31, 32a and 32b.

The chamfered edges 24 and 34 are further substantially identical to each other and extend at an angle of approximately 45° with respect to the tread surface over a width of approximately 2 mm and a depth of approximately 2 mm.

### EXAMPLE

The Applicant has set out the following tyres for comparison:
INV 1: a tyre with the measurement 225/50 R17, with 144 pitches, formed according to the first embodiment of the present invention described above with reference to Figures 1 to 3;
INV 2: a similar tyre to INV 1 formed according to the second embodiment of the present invention described above with reference to Figure 4;
CON 1: a similar tyre to INV 1, with the same configuration of the tread pattern but with a total number of pitches of 72;
CON 2: a similar tyre to CON 1, wherein one groove with a width of approximately 1 mm (one sipe) which extends longitudinally along the entire block is formed in each block;
CON 3: a similar tyre to CON 2, wherein two grooves with a width of approximately 1 mm (two sipes) which extend longitudinally along the entire block are formed in each block;
CON 4: a similar tyre to CON 2, wherein three grooves with a width of approximately 1 mm (three sipes) which extend longitudinally along the entire block are formed in each shoulder block and wherein many grooves with a width of approximately 1 mm (from 5 to 10 sipes) which extend transversely to the block are formed in each block of the central region.

The tread pattern of CON 1 represents a potential example of a summer tyre, the tread patterns of CON2 and CON3 represent respective potential examples of "all season" tyres while the tread pattern of CON 4 represents a potential example of a winter tyre.

The Applicant has initially carried out a series of calculations and simulations in order to evaluate beforehand the performance levels of the tyres both on snowy road surfaces and on dry road surfaces.

In particular, for each tyre the following have been measured or calculated: the rigidity in a circumferential direction, the lateral rigidity, the performance level during braking on snow and the performance level during traction on snow.

The rigidity in a circumferential direction is an indication of the capacity of the tread band for withstanding tangential stresses which are substantially parallel to the circumferential direction. The higher is the value thereof, the better will be the behaviour of the tyre during acceleration and braking on dry surfaces.

The lateral rigidity is an indication of the capacity of the tread band for withstanding tangential stresses which are substantially parallel to the axial direction. The higher is the value thereof, the better will be the behaviour of the tyre on bends on dry surfaces.

The performance levels during braking and during traction on snow are evaluated by making the corresponding values of a reference tyre equal to 100.

The results are set out in the following Table 1.

**Table 1**

| Name | Pitches | Circumferential rigidity | Lateral rigidity | Braking on snow | Traction on snow |
|---|---|---|---|---|---|
| INV 1 | 144 | 7.7 | 8.7 | 101 | 103 |
| INV 2 | 144 | 7.7 | 8.7 | 103 | 109 |
| CON 1 | 72 | 9.2 | 9.5 | 95 | 94 |
| CON 2 | 72 | 7.5 | 8.5 | 99 | 101 |
| CON 3 | 72 | 6.2 | 7.7 | 103 | 111 |
| CON 4 | 72 | 5.9 | 8.5 | 103 | 108 |

Analysis of the results shows how, surprisingly, the performance levels of the tyre constructed according to the first embodiment of the invention (INV 1) are better than a tyre which is provided with blocks with a sipe (CON 2) both on dry surfaces and on snowy surfaces.

Furthermore, the tyre INV 1 has performance levels during braking on snow which are generally similar to those of a tyre with a typically winter tread pattern (CON 4), but providing substantially better performance levels on dry surfaces.

Actually, the performance levels of the tyre constructed according to the second embodiment of the invention (INV 2), while maintaining the optimum performance levels on dry surfaces, further have a behaviour on snowy surfaces, both in terms of traction and of braking, which is generally comparable with those of a winter tyre (CON 4).

## Claims

1. A tyre (1; 100) for vehicle wheels comprising a tread band (2), on which there are formed a plurality of grooves (20, 30, 7a, 7b, 8a, 8b) which generally define a tread pattern of said tyre, wherein there is defined on said tread band (2):
- a central region (6) which extends so as to straddle an equatorial plane (X) of said tyre,
- a first shoulder region (4) which extend from a first axial end (4a) of said tread band (2) towards said central region (6),
- a second shoulder region (5) which extend from a second axial end (5a) of said tread band (2) towards said central region (6), and
- a plurality of blocks (40),
wherein each shoulder region (4; 5) is delimited at the axially internal side by a first circumferential groove (7a; 7b),
wherein said central region (6) is passed through by a pair of second circumferential grooves (8a, 8b), which are different from said first circumferential grooves (7a, 7b), so as to define in said central region (6):
- an equatorial region (9), which is axially delimited by said pair of second circumferential grooves (8a, 8b) and
- a pair of intermediate regions (10a, 10b), each one axially delimited by a first circumferential groove (7a; 7b) and by a second circumferential groove (8a; 8b),
wherein there is defined in said tread pattern:
- at least one pitch (M) which extends axially on said tread band (2) between a first axial end (4a) and a second axial end (5a) of said tread band (2), said at least one pitch (M) being repeated over the entire circumferential development of said tread band (2), wherein a circumferential end of each pitch (M) is delimited by a first plurality of transverse grooves (20) which extend from said first axial end (4a) of said tread band (2) towards an equatorial plane (X) of said tyre and by a second plurality of transverse grooves (30) which extend from said second axial end (5a) of said tread band (2) towards said equatorial plane (X), and
- a total number of said pitches formed on said tread band (2),
wherein said total number of pitches is greater than 110.

2. A tyre (1; 100) according to claim 1, wherein said total number of pitches is less than 250, preferably between 120 and 180.

3. A tyre (1; 100) according to any one of the preceding claims, wherein said tread pattern has a mean pitch length between 10 mm and 18 mm, preferably between 10 mm and 14 mm.

4. A tyre (1; 100) according to any one of the preceding claims, wherein said tread band (2) has an external circumference less than 2600 mm, preferably between 1650 mm and 2200 mm.

5. A tyre (1; 100) according to any one of the preceding claims, wherein said plurality of blocks (40) are, at least in said central region (6), solid blocks.

6. A tyre (1; 100) according to claim 5, wherein at least 60% of the blocks (40) which are formed on said tread band (2) are solid blocks.

7. A tyre (1; 100) according to any one of the preceding claims, wherein said second plurality of transverse grooves (30) is axially correspondent to said first plurality of transverse grooves (20).

8. A tyre (1; 100) according to any one of the preceding claims, wherein each first plurality of transverse grooves (20) comprises:
- a first transverse shoulder groove (21) which extends from said first axial end (4a) of said tread band through said first shoulder region (4), said first transverse shoulder groove (21) being preferably inclined with respect to a circumferential direction at an angle between 80° and 85°,
- a first intermediate transverse groove (22a) which extend through a first intermediate region (10a) of said central region (6), and
- a first equatorial transverse groove (22b) which extend through an equatorial region (9) of said central region (6).

9. A tyre (1; 100) according to any one of the preceding claims, wherein each second plurality of transverse grooves (30) comprises:
- a second transverse shoulder groove (31) which extends from said second axial end (5a) of said tread band through said second shoulder region (5), said second transverse shoulder groove (31) being preferably inclined with respect to a circumferential direction at an angle between 80° and 85°,
- a second intermediate transverse groove (32a) which extend through a second intermediate region (10b) of said central region (6), and
- a second equatorial transverse groove (32b) which extend through an equatorial region (9) of said central region (6).

10. A tyre (1; 100) according to claims 8 and 9, wherein said first and second intermediate transverse grooves (22a, 32a) and said first and second equatorial transverse grooves (22b, 32b) are inclined with respect to a circumferential direction at an angle between 40° and 60°.

11. A tyre (1; 100) according to claims 8 and 9, wherein said first intermediate transverse groove (22a) and/or said second intermediate transverse groove (32a) has/have a width less than said first transverse shoulder groove (21) and/or said second transverse shoulder groove (31).

12. A tyre (1; 100) according to claims 8 and 9, wherein said first equatorial transverse groove (22b) and/or said second equatorial transverse groove (32b) has/have a width less than said first transverse shoulder groove (21) and/or said second transverse shoulder groove (31).

13. A tyre (1; 100) according to any one of the preceding claims , wherein said first plurality of transverse grooves (20) and said second plurality of transverse grooves (30) are inclined in a substantially symmetrical manner with respect to said equatorial plane (X) of said tyre.

14. A tyre (100) according to any one of the preceding claims, wherein at least one block (40) which is delimited by a transverse groove of said first plurality of transverse grooves (20) and/or said second plurality of transverse grooves (30) has a chamfered edge (24, 34) at a lateral wall (23, 33) of said transverse groove.

15. A tyre (100) according to claim 14, wherein, with respect to a preferential rolling direction (F) of said tyre, said chamfered edge (24, 34) is formed at a lateral front wall (23, 33) of said transverse groove (20, 30).

## Patentansprüche

1. Reifen (1; 100) für Fahrzeugräder, umfassend ein Laufflächenband (2), auf dem eine Vielzahl von Nuten (20, 30, 7a, 7b, 8a, 8b) gebildet ist, die im Allgemeinen ein Laufflächenmuster des Reifens definieren,
wobei auf dem Laufflächenband (2) Folgendes definiert ist:
ein zentraler Bereich (6), der sich derart erstreckt, dass er eine Äquatorialebene (X) des Reifens überspannt,
- ein erster Schulterbereich (4), der sich von einem ersten axialen Ende (4a) des Laufflächenbands (2) in Richtung des zentralen Bereichs (6) erstreckt,
- ein zweiter Schulterbereich (5), der sich von einem zweiten axialen Ende (5a) des Laufflächenbands (2) in Richtung des zentralen Bereichs (6) erstreckt, und
- eine Vielzahl von Blöcken (40),
wobei jeder Schulterbereich (4; 5) an der axialen Innenseite durch eine erste Umfangsnut (7a; 7b) begrenzt ist,
wobei der zentrale Bereich (6) von einem Paar zweiter Umfangsnuten (8a, 8b) durchquert ist, die sich von den ersten Umfangsnuten (7a, 7b) unterscheiden, um in dem zentralen Bereich (6) Folgendes zu definieren:
- einen äquatorialen Bereich (9), der axial durch das Paar zweiter Umfangsnuten (8a, 8b) begrenzt ist, und
- ein Paar von Zwischenbereichen (10a, 10b), wobei jeder axial durch eine erste Umfangsnut (7a; 7b) und durch eine zweite Umfangsnut (8a; 8b) begrenzt ist,
wobei in dem Laufflächenmuster Folgendes definiert ist:
- mindestens eine Teilung (M), die sich axial auf dem Laufflächenband (2) zwischen einem ersten axialen Ende (4a) und einem zweiten axialen Ende (5a) des Laufflächenbands (2) erstreckt, wobei die mindestens eine Teilung (M) über die gesamte Umfangsentwicklung des Laufflächenbands (2) wiederholt wird, wobei ein Umfangsende jeder Teilung (M) durch eine erste Vielzahl von Quernuten (20), die sich von dem ersten axialen Ende (4a) des Laufflächenbands (2) in Richtung einer Äquatorialebene (X) des Reifens erstrecken, und durch eine zweite Vielzahl von Quernuten (30) begrenzt ist, die sich von dem zweiten axialen Ende (5a) des Laufflächenbands (2) in Richtung der Äquatorialebene (X) erstrecken, und
- eine Gesamtzahl der Teilungen, die auf dem Laufflächenband (2) gebildet sind, wobei die Gesamtzahl von Teilungen größer als 110 ist.

2. Reifen (1; 100) nach Anspruch 1, wobei die Gesamtzahl von Teilungen weniger als 250, vorzugsweise zwischen 120 und 180 ist.

3. Reifen (1; 100) nach einem der vorstehenden Ansprüche, wobei das Laufflächenmuster eine mittlere Teilungslänge zwischen 10 mm und 18 mm, vorzugsweise zwischen 10 mm und 14 mm aufweist.

4. Reifen (1; 100) nach einem der vorstehenden Ansprüche, wobei das Laufflächenband (2) einen Außenumfang von weniger als 2600 mm, vorzugsweise zwischen 1650 mm und 2200 mm aufweist.

5. Reifen (1; 100) nach einem der vorstehenden Ansprüche, wobei die Vielzahl von Blöcken (40) mindestens in dem zentralen Bereich (6) massive Blöcke sind.

6. Reifen (1; 100) nach Anspruch 5, wobei mindestens 60 % der Blöcke (40), die auf dem Laufflächenband (2) gebildet sind, massive Blöcke sind.

7. Reifen (1; 100) nach einem der vorstehenden Ansprüche, wobei die zweite Vielzahl von Quernuten (30) axial der ersten Vielzahl von Quernuten (20) entspricht.

8. Reifen (1; 100) nach einem der vorstehenden Ansprüche, wobei jede erste Vielzahl von Quernuten (20) Folgendes umfasst:
- eine erste Querschulternut (21), die sich von dem ersten axialen Ende (4a) des Laufflächenbands durch den ersten Schulterbereich (4) erstreckt, wobei die erste Querschulternut (21) vorzugsweise in Bezug auf eine Umfangsrichtung in einem Winkel zwischen 80° und 85° geneigt ist,
- eine erste Zwischenquernut (22a), die sich durch einen ersten Zwischenbereich (10a) des zentralen Bereichs (6) erstreckt, und
- eine erste äquatoriale Quernut (22b), die sich durch einen äquatorialen Bereich (9) des zentralen Bereichs (6) erstreckt.

9. Reifen (1; 100) nach einem der vorstehenden Ansprüche, wobei jede zweite Vielzahl von Quernuten (30) Folgendes umfasst:
- eine zweite Querschulternut (31), die sich von dem zweiten axialen Ende (5a) des Laufflächenbands durch den zweiten Schulterbereich (5) erstreckt, wobei die zweite Querschulternut (31) vorzugsweise in Bezug auf eine Umfangsrichtung in einem Winkel zwischen 80° und 85° geneigt ist,
- eine zweite Zwischenquernut (32a), die sich durch einen zweiten Zwischenbereich (10b) des zentralen Bereichs (6) erstreckt, und
- eine zweite äquatoriale Quernut (32b), die sich durch einen äquatorialen Bereich (9) des zentralen Bereichs (6) erstreckt.

10. Reifen (1; 100) nach den Ansprüchen 8 und 9, wobei die erste und zweite Zwischenquernut (22a, 32a) und die erste und zweite äquatoriale Quernut (22b, 32b) in Bezug auf eine Umfangsrichtung in einem Winkel zwischen 40° und 60° geneigt sind.

11. Reifen (1; 100) nach den Ansprüchen 8 und 9, wobei die erste Zwischenquernut (22a) und/oder die zweite Zwischenquernut (32a) eine geringere Breite als die erste Querschulternut (21) und/oder die zweite Querschulternut (31) aufweist/aufweisen.

12. Reifen (1; 100) nach den Ansprüchen 8 und 9, wobei die erste äquatoriale Quernut (22b) und/oder die zweite äquatoriale Quernut (32b) eine geringere Breite als die erste Querschulternut (21) und/oder die zweite Querschulternut (31) aufweist/aufweisen.

13. Reifen (1; 100) nach einem der vorstehenden Ansprüche, wobei die erste Vielzahl von Quernuten (20) und die zweite Vielzahl von Quernuten (30) auf eine im Wesentlichen symmetrische Weise in Bezug auf die Äquatorialebene (X) des Reifens geneigt sind.

14. Reifen (100) nach einem der vorstehenden Ansprüche, wobei mindestens ein Block (40), der durch eine Quernut der ersten Vielzahl von Quernuten (20) und/oder der zweiten Vielzahl von Quernuten (30) begrenzt ist, eine abgeschrägte Kante (24, 34) an einer Seitenwand (23, 33) der Quernut aufweist.

15. Reifen (100) nach Anspruch 14, wobei, in Bezug auf eine bevorzugte Rollrichtung (F) des Reifens, die abgeschrägte Kante (24, 34) an einer seitlichen Vorderwand (23, 33) der Quernut (20, 30) gebildet ist.

## Revendications

1. Pneu (1 ; 100) pour roues de véhicule comprenant une bande de roulement (2), sur laquelle sont formées une pluralité de rainures (20, 30, 7a, 7b, 8a, 8b) qui définissent généralement une sculpture dudit pneu,
dans lequel il est défini sur ladite bande de roulement (2) :
une région centrale (6) qui s'étend de manière à chevaucher un plan équatorial (X) dudit pneu,
- une première région d'épaulement (4) qui s'étend d'une première extrémité axiale (4a) de ladite bande de roulement (2) vers ladite région centrale (6),
- une seconde région d'épaulement (5) qui s'étend d'une seconde extrémité axiale (5a) de ladite bande de roulement (2) vers ladite région centrale (6), et
- une pluralité de blocs (40),
dans lequel chaque région d'épaulement (4 ; 5) est délimitée du côté axialement interne par une première rainure circonférentielle (7a ; 7b),
dans lequel ladite région centrale (6) est traversée par une paire de secondes rainures circonférentielles (8a, 8b), qui sont différentes desdites premières rainures circonférentielles (7a, 7b), de manière à définir dans ladite région centrale (6) :
- une région équatoriale (9), qui est délimitée axialement par ladite paire de secondes rainures circonférentielles (8a, 8b) et
- une paire de régions intermédiaires (10a, 10b), chacune étant délimitée axialement par une première rainure circonférentielle (7a ; 7b) et par une seconde rainure circonférentielle (8a ; 8b),
dans lequel il est défini dans ladite sculpture :
- au moins un pas (M) qui s'étend axialement sur ladite bande de roulement (2) entre une première extrémité axiale (4a) et une seconde extrémité axiale (5a) de ladite bande de roulement (2), ledit au moins un pas (M) étant répété sur toute la circonférence de ladite bande de roulement (2), dans lequel une extrémité circonférentielle de chaque pas (M) est délimitée par une première pluralité de rainures transversales (20) qui s'étendent de ladite première extrémité axiale (4a) de ladite bande de roulement (2) vers un plan équatorial (X) dudit pneu et par une seconde pluralité de rainures transversales (30) qui s'étendent de ladite seconde extrémité axiale (5a) de ladite bande de roulement (2) vers ledit plan équatorial (X), et
- un nombre total desdits pas formés sur ladite bande de roulement (2), dans lequel ledit nombre total de pas est supérieur à 110.

2. Pneu (1 ; 100) selon la revendication 1, dans lequel ledit nombre total de pas est inférieur à 250, de préférence compris entre 120 et 180.

3. Pneu (1 ; 100) selon l'une quelconque des revendications précédentes, dans lequel ladite sculpture présente une longueur de pas moyenne comprise entre 10 mm et 18 mm, de préférence entre 10 mm et 14 mm.

4. Pneu (1 ; 100) selon l'une quelconque des revendications précédentes, dans lequel ladite bande de roulement (2) présente une circonférence externe inférieure à 2 600 mm, de préférence comprise entre 1 650 mm et 2 200 mm.

5. Pneu (1 ; 100) selon l'une quelconque des revendications précédentes, dans lequel ladite pluralité de blocs (40) sont, au moins dans ladite région centrale (6), des blocs pleins.

6. Pneu (1 ; 100) selon la revendication 5, dans lequel au moins 60 % des blocs (40) qui sont formés sur ladite bande de roulement (2) sont des blocs pleins.

7. Pneu (1 ; 100) selon l'une quelconque des revendications précédentes, dans lequel ladite seconde pluralité de rainures transversales (30) correspond axialement à ladite première pluralité de rainures transversales (20).

8. Pneu (1 ; 100) selon l'une quelconque des revendications précédentes, dans lequel chaque première pluralité de rainures transversales (20) comprend :
- une première rainure d'épaulement transversale (21) qui s'étend depuis ladite première extrémité axiale (4a) de ladite bande de roulement le long de ladite première région d'épaulement (4), ladite première rainure d'épaulement transversale (21) étant de préférence inclinée par rapport à une direction circonférentielle selon un angle compris entre 80° et 85°,
- une première rainure transversale intermédiaire (22a) qui s'étend à travers une première région intermédiaire (10a) de ladite région centrale (6), et
- une première rainure transversale équatoriale (22b) qui s'étend à travers une région équatoriale (9) de ladite région centrale (6).

9. Pneu (1 ; 100) selon l'une quelconque des revendications précédentes, dans lequel chaque seconde pluralité de rainures transversales (30) comprend :
- une seconde rainure d'épaulement transversale (31) qui s'étend depuis ladite seconde extrémité axiale (5a) de ladite bande de roulement le long de ladite seconde région d'épaulement (5), ladite seconde rainure d'épaulement transversale (31) étant de préférence inclinée par rapport à une direction circonférentielle selon un angle compris entre 80° et 85°,
- une seconde rainure transversale intermédiaire (32a) qui s'étend à travers une seconde région intermédiaire (10b) de ladite région centrale (6), et
- une seconde rainure transversale équatoriale (32b) qui s'étend à travers une région équatoriale (9) de ladite région centrale (6).

10. Pneu (1 ; 100) selon les revendications 8 et 9, dans lequel lesdites première et seconde rainures transversales intermédiaires (22a, 32a) et lesdites première et seconde rainures transversales équatoriales (22b, 32b) sont inclinées par rapport à une direction circonférentielle selon un angle compris entre 40° et 60°.

11. Pneu (1 ; 100) selon les revendications 8 et 9, dans lequel ladite première rainure transversale intermédiaire (22a) et/ou ladite seconde rainure transversale intermédiaire (32a) présente(nt) une largeur inférieure à ladite première rainure d'épaulement transversale (21) et/ou à ladite seconde rainure d'épaulement transversale (31).

12. Pneu (1 ; 100) selon les revendications 8 et 9, dans lequel ladite première rainure transversale équatoriale (22b) et/ou ladite seconde rainure transversale équatoriale (32b) présente(nt) une largeur inférieure à ladite première rainure d'épaulement transversale (21) et/ou à ladite seconde rainure d'épaulement transversale (31).

13. Pneu (1 ; 100) selon l'une quelconque des revendications précédentes, dans lequel ladite première pluralité de rainures transversales (20) et ladite seconde pluralité de rainures transversales (30) sont inclinées de manière sensiblement symétrique par rapport audit plan équatorial (X) dudit pneu.

14. Pneu (100) selon l'une quelconque des revendications précédentes, dans lequel au moins un bloc (40) qui est délimité par une rainure transversale de ladite première pluralité de rainures transversales (20) et/ou de ladite seconde pluralité de rainures transversales (30) présente un bord chanfreiné (24, 34) au niveau d'une paroi latérale (23, 33) de ladite rainure transversale.

15. Pneu (100) selon la revendication 14, dans lequel, par rapport à une direction de roulement préférentielle (F) dudit pneu, ledit bord chanfreiné (24, 34) est formé au niveau d'une paroi latérale avant (23, 33) de ladite rainure transversale (20, 30).
